# EUROPÄISCHE PATENTANMELDUNG

(11) **EP 1 974 885 A2**
(43) Veröffentlichungstag der Anmeldung: **01.10.2008**
(21) Anmeldenummer: 08012032.2
(22) Anmeldetag: 06.04.2006
(51) Int. Cl.: B28C 9/00, B28C 7/04, B01F 5/04

(54) **Verwendung von Markierungsmitteln in Baumaterial**

(30) Priorität: 06.04.2005 DE 102005015841
(62) Teilanmeldung aus: 06007304.6
(71) Anmelder: STO AG, D-79780 Stühlingen (DE)
(72) Erfinder: Höninger, Johannes, 88348 Bad Saulgau (DE)
(74) Vertreter: Maiwald Patentanwalts GmbH

(57) **Zusammenfassung**

Die vorliegende Erfindung betrifft die Verwendung von Markierungsmitteln zur Feststellung, ob Baumaterial
a. mit einem Abbindeverzögerer und/oder einem Erstarrungsverzögerer oder
b. mit einem Erstarrungsbeschleuniger und/oder Abbindebeschleuniger
in einer Vorrichtung zum Verarbeiten von Baumaterial versetzt ist, wobei das Markierungsmittel durch eine Zugabeeinrichtung, vorzugsweise eine automatisch arbeitende Zugabeeinrichtung, in die Vorrichtung dosiert wird, die eine automatisch einstellbare Zugabe des Markierungsmittels nach Art und/oder Menge in Abhängigkeit von erwarteten Stillstandszeiten, Witterungsbedingungen und/oder Produkteigenschaften ermöglicht.

## Beschreibung

Die Erfindung betrifft eine Vorrichtung zum Verarbeiten von vorzugsweise pastösem und erstarrungsfähigem Baumaterial mit mindestens einer zum Beschicken der Vorrichtung mit mindestens einem zur Herstellung des Baumaterials einsetzbaren Ausgangsstoff dienenden Beschickungsöffnung und mindestens einer zum Abgeben des Baumaterials dienenden Abgabeöffnung sowie ein Verfahren zum Betreiben einer derartigen Vorrichtung.

Derartige Vorrichtungen werden auf Baustellen beispielsweise in Form von Mörtelmischern, -pumpen, -rohren und/oder -schläuchen eingesetzt. Bei einem Mörtelmischer wird einer Mischeinrichtung über eine geeignete Beschickungsöffnung schüttfähiger, insbesondere pulverförmiger Trockenmörtel und über eine weitere Beschickungsöffnung Wasser zugeführt. In der Mischeinrichtung werden diese beiden Ausgangsstoffe innig miteinander vermengt, und anschließend wird das pastöse Baumaterial über eine Abgabeöffnung und daran angeschlossene Rohre und/oder Schläuche ggf. mit Hilfe von Pumpen zum Applikationsort gefördert. Am Applikationsort, wie etwa einer Wand- oder Bodenfläche, erstarrt das dort ausgebrachte pastöse Baumaterial zu einer festen Beschichtung.

Ferner werden Vorrichtungen dieser Art zum Herstellen von Wärmedämmverbundsystemen mit an einer Wand befestigten Dämmplatten und einer auf den Dämmplatten aufgetragenen, ggf. mehrlagigen Armierungsschicht mit oder ohne Armierungsgewebe eingesetzt. Solche Wärmedämmverbundsysteme sind beispielsweise in der DE 198 39 295 A1 beschrieben. Der Offenbarungsgehalt dieser Schrift wird hinsichtlich des Aufbaus und der Herstellung von Wärmedämmverbundsystemen hiermit durch ausdrückliche Inbezugnahme in diese Beschreibung aufgenommen. Vorrichtungen der eingangs beschriebenen Art können im Rahmen der Herstellung von Wärmedämmverbundsystemen sowohl im Zusammenhang mit dem Auftrag eines Klebstoffs, wie etwa eines Klebemörtels, insbesondere Leichtmörtels, auf die an der Wand zu befestigenden Dämmplatten als auch im Zusammenhang mit dem Auftrag der Armierungsschicht auf die an der Wand befestigten Dämmplatten zum Einsatz kommen.

Nach Fertigstellung eines Bauabschnitts muß zur Vermeidung einer Beeinträchtigung der Funktionsfähigkeit der Verarbeitungsvorrichtung dafür gesorgt werden, daß das noch in der Vorrichtung enthaltene Baumaterial nicht frühzeitig erstarrt. Zu diesem Zweck wurde bereits vorgeschlagen, das in der Verarbeitungsvorrichtung nach Abschluß eines Bauabschnittes noch enthaltene Baumaterial mit einem geeigneten Reinigungsfluid, wie etwa Wasser, aus der Vorrichtung auszutreiben und zur Vermeidung von Verschmutzungen und/oder Kontaminationen der Baustelle in geeigneten Sammeleinrichtungen zu sammeln. Das so gesammelte Restbaumaterial kann dann wiederverwertet oder einer geeigneten Entsorgung zugeführt werden. Das Sammeln des aus der Verarbeitungsvorrichtung ausgetriebenen Baumaterials wird allerdings oft als störend empfunden, weil es mit einem beachtlichen Zeitaufwand verbunden ist. Daher kommt es in vielen Fällen dazu, daß das ausgetriebene Baumaterial in den Boden eingeleitet wird und dort Verschmutzungen und/oder Kontaminationen verursacht.

Gemäß einem in der DE 101 09 841 C2 beschriebenen Vorschlag zur Vermeidung von Beschädigungen der Verarbeitungsmaschinen durch vorzeitiges Erstarren des darin zu verarbeitenden Baumaterials werden Trockenmörtel mit Abbindeverzögerern eingesetzt, welche die Abbindung des Trockenmörtels bei Kontakt mit Wasser verzögern, ohne die Wasserfestigkeit des abgebundenen Baumaterials zu reduzieren. Wenngleich mit diesen bekannten Trockenmörteln eine Beschädigung der Verarbeitungsvorrichtungen sicher verhindert werden kann, führt der Einsatz der vorgeschlagenen besonderen Trockenmörtelmischungen insbesondere bei widrigen Witterungsverhältnissen auch dazu, daß das am Applikationsort abgegebene Baumaterial ebenfalls nur langsam abbindet. Dadurch wird die Qualität des Endproduktes in Form einer beschichteten Wand- oder Bodenfläche in vielen Fällen beeinträchtigt. Dieses Problem tritt besonders deutlich bei der Herstellung von Wärmedämmverbundsystemen hervor, wenn mit einem Erstarrungsverzögerer versetzte und in Großgebinden angelieferte Trockenmörtelmischungen zur Herstellung eines Dämmplattenklebers eingesetzt werden.

Angesichts der vorstehend beschriebenen Probleme im Stand der Technik liegt der Erfindung die Aufgabe zugrunde, eine Weiterbildung von Vorrichtungen der eingangs beschriebenen Art anzugeben, mit der unter Sicherstellung der Qualität des Endproduktes eine Beeinträchtigung der Funktionsfähigkeit der Vorrichtung ausgeschlossen werden kann, sowie ein Verfahren zum Betreiben einer derartigen Vorrichtung bereitzustellen.

In vorrichtungsmäßiger Hinsicht wird diese Aufgabe durch eine Weiterbildung der bekannten Vorrichtungen gelöst, die im wesentlichen dadurch gekennzeichnet ist, daß der mindestens einen Beschickungsöffnung mindestens eine zum Zugeben mindestens eines zusätzlichen Mittels zu mindestens einem Ausgangsstoff betreibbare Zugabeeinrichtung zugeordnet ist.

Die Erfindung geht auf die verblüffend einfache Erkenntnis zurück, daß es zur Sicherstellung der Funktionsfähigkeit der Vorrichtung nicht erforderlich ist, die gesamte Trockenmörtelmischung mit einem geeigneten Abbindeverzögerer zu versetzen, sondern daß es vielmehr ausreicht, diesen Abbindeverzögerer nur bei Beendigung eines Bauabschnittes mit einer geeigneten Zugabeeinrichtung zuzugeben, damit das nach Fertigstellung des Bauabschnittes noch in der Verarbeitungsvorrichtung enthaltene Baumaterial nicht vorzeitig erstarrt. Gleichzeitig wird dadurch sichergestellt, daß das während der Ausführung des Bauabschnittes aus der Vorrichtung abgegebene Baumaterial die gewünschten Erstarrungseigenschaften aufweist, so daß der Erhalt der gewünschten Qualität des Endproduktes auch bei widrigen Witterungsbedingungen sichergestellt wird.

Wie vorstehend bereits im Zusammenhang mit herkömmlichen Vorrichtungen zum Verarbeiten von Baumaterial erläutert, kann die Vorrichtung bei einer zweckmäßigen Ausführungsform der Erfindung eine über eine erste Beschickungsöffnung mit einem flüssigen Stoff, wie etwa Wasser, und über eine zweite Beschickungsöffnung mit einem rieselfähigen Schüttgut, wie etwa einer Mörtel-Trockenmischung, und/oder einem pastösen Stoff beschickbare Mischeinrichtung, wie etwa ein Mischrohr, enthalten. Im Hinblick auf die im allgemeinen gewünschte homogene Verteilung des zusätzlichen Mittels, welche zum Erhalt der gewünschten Abbindeverzögerung in der Verarbeitungsvorrichtung vorteilhaft ist, hat es sich als besonders zweckmäßig erwiesen, wenn die Zugabeeinrichtung zum Zugeben des zusätzlichen Mittels zu dem über die erste Beschickungsöffnung in die Mischeinrichtung einzuleitenden flüssigen Stoff ausgelegt ist. Überraschenderweise hat es sich gezeigt, daß durch Zugabe des zusätzlichen Mittels zu dem flüssigen Stoff sogar eine bessere Homogenität des Endprodukts erreichbar ist als bei Verwendung einer vorab mit dem zusätzlichen Mittel versetzten Trockenmischung. Daher können mit erfindungsgemäß ausgestatteten Vorrichtungen auch lokale Feststoffbrücken in Mörtelmischern zuverlässig verhindert werden. Im Rahmen der Erfindung ist auch daran gedacht, den Ausgangsstoff erst in unmittelbarer Nähe der Beschickungsöffnung oder in der Beschickungsöffnung selbst mit dem zusätzlichen Mittel zu versetzen. Als besonders zweckmäßig im Hinblick auf eine genaue Dosierung hat es sich allerdings erwiesen, wenn der Ausgangsstoff bereits vor Erreichen der Beschickungsöffnung mit dem zusätzlichen Mittel versetzt wird.

Insbesondere in Fällen, in denen der flüssige Ausgangsstoff mit einem zusätzlichen Mittel versetzt wird, hat es sich als besonders zweckmäßig erwiesen, wenn der mindestens einen Beschickungsöffnung eine Leitungsanordnung mit mindestens einer Verzweigungsstelle zugeordnet ist, über die der Beschickungsöffnung wahlweise ein Ausgangsstoff mit dem zugegebenen zusätzlichen Mittel oder ein Ausgangsstoff ohne das zusätzliche Mittel zuführbar ist. Bei dieser Ausführungsform der Erfindung kann die Zugabeeinrichtung in einer über zwei Verzweigungsstellen mit einer Hauptleitung verbindbaren Bypassleitung der Leitungsanordnung angeordnet sein. Falls der vorzugsweise flüssige Ausgangsstoff über die Bypassleitung in die Vorrichtung eingeleitet wird, kann diesem Stoff mit Hilfe der Zugabeeinrichtung das zusätzliche Mittel beigemischt werden. Andererseits kann der Ausgangsstoff bei Einleitung in die Verarbeitungsvorrichtung durch die Hauptleitung unverändert verarbeitet werden. Zusätzlich oder alternativ kann das zusätzliche Mittel auch über eine Injektionseinrichtung in eine Leitungsanordnung eingebracht werden.

Im Hinblick auf die gewünschte Vermeidung einer Beschädigung der Verarbeitungsvorrichtung weist das zusätzliche Mittel zweckmäßigerweise einen Erstarrungsverzögerer auf.

Im Rahmen der Erfindung ist allerdings auch an die Zugabe von Erstarrungsbeschleunigern gedacht, um so bei wechselnden Witterungsbedingungen gleichbleibende Produkteigenschaften sicherzustellen.

Zu Kontrollzwecken kann das zusätzliche Mittel zusätzlich oder alternativ auch ein Markierungsmittel, wie etwa ein Färbemittel, enthalten. In diesem Fall kann durch Kontrolle des aus der Abgabeöffnung abgegebenen Baumaterials festgestellt werden, ob das noch in der Verarbeitungsvorrichtung enthaltene Baumaterial vollständig mit dem zusätzlichen Mittel versetzt ist. Das ist erst dann der Fall, wenn das aus der Abgabeöffnung austretende Baumaterial das Markierungsmittel erkennen läßt. Im Hinblick auf die gewünschte Qualitätssicherung des Endproduktes ist darauf hinzuweisen, daß die Zugabe eines Erstarrungsverzögerers nach Abschluß eines Bauabschnittes für die Qualität des im Rahmen eines folgenden Bauabschnittes hergestellten Endproduktes unproblematisch ist, weil die Menge des zugegebenen zusätzlichen Mittels so dosiert werden kann, daß damit gerade die erhöhte Verweilzeit in der Verarbeitungsvorrichtung während des Übergangs von einem Bauabschnitt zum nächsten Bauabschnitt kompensiert wird. Diese zur Kompensation der erhöhten Verweilzeit erforderliche Dosierung fällt besonders leicht, wenn aufeinanderfolgende Bauabschnitte an aufeinanderfolgenden Tagen hergestellt werden, so daß die Verweilzeit in der Verarbeitungsvorrichtung um einen festen Zeitabschnitt verlängert wird. Zweckmäßigerweise umfaßt die Zugabeeinrichtung einer erfindungsgemäßen Vorrichtung dazu eine ggf. automatisch arbeitende Dosiereinrichtung, mit der Art und/oder Menge des zusätzlichen Mittels in Abhängigkeit von erwarteten Stillstandszeiten, Witterungsbedingungen und/oder Produkteigenschaften ggf. automatisch eingestellt werden können.

Wie der vorstehenden Erläuterung erfindungsgemäßer Vorrichtungen zu entnehmen ist, ist ein erfindungsgemäßes Verfahren zum Betreiben einer Vorrichtung zum Verarbeiten von vorzugsweise pastösem und erstarrungsfähigem Baumaterial, bei dem die Vorrichtung mit mindestens einem zur Herstellung des Baumaterials einsetzbaren Ausgangsstoff beschickt wird, im wesentlichen dadurch gekennzeichnet, daß mindestens einem der Vorrichtung zugeführten Ausgangsstoff zumindest zeitweise, insbesondere im Zusammenhang mit der Beendigung eines Verarbeitungsabschnitts, ein zusätzliches Mittel zugegeben wird. Dabei kann das zusätzliche Mittel einen Erstarrungsverzögerer, einen Erstarrungsbeschleuniger und/oder ein Markierungsmittel aufweisen, wobei der Ausgangsstoff zum Zugeben des zusätzlichen Stoffes über eine Bypassleitung umgeleitet werden kann. Wie vorstehend bereits erläutert, wird mindestens einer der Ausgangsstoffe bei einer bevorzugten Ausführungsform der Erfindung bereits vor Erreichen der Beschickungsöffnung mit dem zusätzlichen Mittel versetzt. Im besonderen bei Verfahren zum Betreiben von Mörtelmischern hat es sich im Zusammenhang mit der Vorbereitung auf Arbeitsunterbrechungen als zweckmäßig erwiesen, wenn zusätzlich oder alternativ ein zusätzliches Mittel zu dem in der Vorrichtung enthaltenen Baumaterial zugegeben wird.

Erfindungsgemäße Vorrichtungen und Verfahren können mit besonderem Vorteil bei der Herstellung von Wärmedämmverbundsystemen eingesetzt werden, wenn zur Herstellung von Dämmplattenklebern geeignete und in Großgebinden angelieferte Trockenmischungen zum Einsatz kommen. In solchen Großgebinden werden ggf. mehrere Kubikmeter der Trockenmischung in einem Silo angeliefert. Die Verarbeitung der so angelieferten Trockenmischungen kann sich über mehrere Tage erstrecken, weil die Anbringung von Dämmplatten mit Hilfe von unter Verwendung der Trockenmischungen hergestellten Klebemörteln mit einem gewissen Zeitaufwand verbunden ist. Dann sind Arbeitsunterbrechungen in vielen Fällen nicht vermeidbar. Bei Einsatz erfindungsgemäßer Verfahren und Vorrichtungen können dabei gleichbleibende Produkteigenschaften ohne zeitaufwendige Reinigungsvorgänge sichergestellt werden.

Im folgenden werden einige Anwendungsgebiete erfindungsgemäßer Verfahren und Vorrichtungen erläutert:

Bei der Verarbeitung mineralisch gebundener Produkte kann der Zeitpunkt des Abbindebeginns durch geeignete Zusatzmittel um einige Stunden oder sogar Tage hinausgeschoben werden. Dadurch bleibt das beispielsweise als Mörtel vorliegende mineralisch gebundene Produkt länger transportierbar bzw. verarbeitbar. Durch Einsatz geeigneter Zusatzmittel kann erreicht werden, daß durch die gewünschte Abbindeverzögerung der anschließende Härtungsprozeß nicht verlangsamt wird. Im Rahmen dieser Erfindung einsetzbare Abbindeverzögerer können Poly-hydroxylverbindungen, wie Saccharose, Glucose, Polyalkohole oder andere zuckerähnliche Stoffe, Hydroxy- und Polyhydroxycarbonsäuren und deren Salze, wie Adipin-, Zitronen-, Itacon-, Milch-, Wein-, Malon- und Fumarsäure, sowie anorganische Phosphorverbindungen, wie Ortho-, Meta-, Pyro- oder Polyphosphate, enthalten. Als organische Phosphorverbindungen können im Rahmen der Erfindung Phosphonsäuren mit Hydroxyl- und/oder Aminogruppen verwendet werden.

Im Rahmen der Erfindung einsetzbare Abbindeverzögerer können auch einen zusätzlichen Dispergiereffekt aufweisen, welcher eine Viskositätsverminderung des Mörtels bewirkt. Dadurch kann eine gute Verarbeitbarkeit auch bei geringerem Wassergehalt erreicht werden.

Je nach gewünschter Abbindeverzögerung kann der als Zusatzmittel zuzugebende Abbindeverzögerer in einer Menge von 0,1 bis 2,0 %, vorzugsweise 0,4 bis 0,8 %, bezogen auf das Bindemittelgewicht des mineralisch gebundenen Produkts, zugegeben werden.

Für die mit Abbindeverzögerern erreichte verzögernde Wirkung sind eine Mehrzahl von Abbindemechanismen verantwortlich. Ein wichtiger Mechanismus wird darin gesehen, daß die Adsorption des Abbindeverzögerers überwiegend auf der Oberfläche der Aluminatkomponenten des Bindemittels erfolgt und eine Verzögerung der Löslichkeit während der C₃S-Hydratation und dem in Lösung gehenden Kalkhydrat bewirkt wird.

Mit erfindungsgemäßen Verfahren und Vorrichtungen hergestellte mineralisch gebundene Produkte können die folgenden Zusammensetzungen aufweisen:

### Beispiel 1

| | |
|---|---|
| Zement der Zementarten CEM I - CEM V (EN 197) | 5-25 Gew.-% |
| Calciumhydroxid | 0,1-10 Gew.-% |
| eine oder mehrere Verdickungsmittel aus der Gruppe Cellulose-ether, modifizierte Celluloseether, Polyvinylalkohole und Stärke-ether | 0,05-0,5 Gew.-% |
| Redispersionspulver | 0,5-6 Gew.-% |
| Hydrophobierungsmittel der Basis Oleate und/oder Stearate | 0,05-1 Gew.-% |
| ein oder mehrere Füllstoffe aus der Gruppe Calciumcarbonat und/oder Quarzsand sowie Leichtfüllstoffe aus der Gruppe Blähton und/oder Blähschiefer und/oder Microhohlkugeln und/oder EPS-Kugeln | 30-90 Gew.-% |
| Titandioxid | 0,1-5 Gew.-% |
| Abbindeverzögerer als zusätzliches Mittel | 0,075-0,25 Gew.-% |

Mit dieser bevorzugten Zusammensetzung kann eine vorzeitige Erstarrung des mineralisch gebundenen Produkts in der Verarbeitungsvorrichtung bei Arbeitsende auf der Baustelle um 16 Uhr und Arbeitsbeginn am nächsten Morgen um 7 Uhr, d. h. bei einer Verweilzeit des Baumaterials von 15 Stunden in der Verarbeitungsvorrichtung, erreicht werden, wenn etwa 250 ml eines Verzögerungskonzentrats zu 20 I Zugabewasser als flüssigem Ausgangsstoff für das Baumaterial zugegeben werden. Das entspricht etwa 0,075 bis 0,15 Gew.-% Abbindeverzögerer, bezogen auf das Gesamtgewicht der Zusammensetzung, wobei der Abbindeverzögerer Hydroxy- und Polyhydroxycarbonsäuren und deren Salze, wie Adipin-, Zitronen-, ltacon-, Milch-, Wein-, Malon- und/oder Fumarsäure, aufweisen kann.

Falls das Baumaterial über ein gesamtes Wochenende in der Verarbeitungsvorrichtung verbleiben soll, kann bei Annahme des Arbeitsendes auf der Baustelle freitags um 14 Uhr und nächstem Arbeitsbeginn am darauffolgenden Montag um 7 Uhr, d. h. bei einer Verweilzeit von insgesamt 65 Stunden, das Verzögerungskonzentrat in einer Menge von 330 ml für 20 I Zugabewasser zugegeben werden. Das entspricht etwa 0,10 bis 0,25 Gew.-% Abbindeverzögerer bezogen auf das Gewicht der Gesamtzusammensetzung. Auch in diesem Fall können als Abbindeverzögerer Hydroxy- und Polyhydroxycarbonsäuren und deren Salze, wie Adipin-, Zitronen-, Itacon-, Milch-, Wein-, Malon- und/oder Fumarsäure, zum Einsatz kommen.

Gemäß einem weiteren Gesichtspunkt der Erfindung kann unter Einsatz erfindungsgemäßer Verfahren und Vorrichtungen auch die Abbindung mineralisch gebundener Produkte bzw. Mörtel beschleunigt werden. Durch geeignete Zusatzmittel kann erreicht werden, daß der Mörtel innerhalb kürzester Zeit erstarrt bzw. erhärtet. Dann kann der Mörtel auch bei tiefen Temperaturen und/oder schneller überarbeitet werden. In diesem Zusammenhang können vier Wirkstoffgruppen zum Einsatz kommen:
Mit der ersten Wirkstoffgruppe wird eine Erhöhung der OH-lonenkonzentration erreicht. Zu diesem Zweck geeignet sind NaOH, KOH, Na2CO3, K2CO3 sowie ggf. Amine, z. B. Triethanolamin, Monoethanolamin, Morpholin.
Mit der zweiten Wirkstoffgruppe wird die zusätzliche Bildung von Calciumaluminaten erreicht. Dazu können Kaliwasserglas-, Natronwasserglas- und/oder Mischwassergläserzusätze eingesetzt werden.
Mit der dritten Wirkstoffgruppe wird die Bildung von Calciumsulfat und Calciumaluminaten erreicht. Zu diesem Zweck geeignet sind Natriumsulfat, Eisensulfat, Aluminiumsulfat (hydratwasserfrei), Aluminiumhydroxid und Natriumaluminat.
Mit der vierten Wirkstoffgruppe wird eine Erhöhung der Calciumionenkonzentration im Anmachwasser erreicht. Zu diesem Zweck können Calciumchlorid, Calciumformiat, Calciumlactat, Calciumrhodanid und/oder Calciumnitrat als Zusatzmittel eingesetzt werden.
Im Rahmen der Erfindung zum Erhalt einer beschleunigten Abbindung einsetzbare Baumaterialien können die folgenden Zusammensetzungen aufweisen:

### Beispiel 2:

| | |
|---|---|
| Zement der Zementarten CEM I - CEM V (EN 197) | 5-25 Gew.-% |
| Calciumhydroxid | 0,1-10 Gew.-% |
| eine oder mehrere Verdickungsmittel aus der Gruppe Cellulose-ether, modifizierte Celluloseether, Polyvinylalkohole und Stär-keether | 0,05-0,5 Gew.-% |
| Redispersionspulver | 0,5-6 Gew.-% |
| Hydrophobierungsmittel der Basis Oleate und/oder Stearate | 0,05-1 Gew.-% |
| ein oder mehrere Füllstoffe aus der Gruppe Calciumcarbonat und/oder Quarzsand sowie Leichtfüllstoffe aus der Gruppe Blähton und/oder Blähschiefer und/oder Microhohlkugeln und/oder EPS-Kugeln | 30-90 Gew.-% |
| Titandioxid | 0,1-5 Gew.-% |
| Abbindebeschleuniger als zusätzliches Mittel | 0,05-5,0 Gew.-% |

Mit diesen Zusammensetzungen kann eine beschleunigte Durchhärtung bei geringen Temperaturen zwischen 1 und 5°C erreicht werden. Bei herkömmlichen Baumaterialien der vorstehend angegebenen Zusammensetzungen, aber ohne Abbindebeschleuniger, erfolgt der Erstarrungsbeginn bei diesen Temperaturen erst nach etwa 20 Stunden. Die Durchhärtung wird erst nach mehreren Tagen erreicht. Wenn bei der Herstellung dieser Baumaterialien 250 ml Beschleunigerkonzentrat auf 20 I Zugabewasser dosiert werden, was einer Zugabe von 0,075 bis 0,50 Gew.-% Abbindebeschleuniger bezogen auf das Gesamtgewicht der Zusammensetzung bedeutet, erfolgt der Erstarrungsbeginn bereits nach etwa 8 Stunden. Eine gute Durchhärtung wird dann bereits nach 24 Stunden erreicht. Auf diese Weise kann eine schnellere Überarbeitung des Baumaterials ermöglicht werden. So ist es beispielsweise möglich, bei der Herstellung eines Wärmedämmverbundsystems morgens die Armierungsmasse aufzutragen und bereits nachmittags mit dem Verputzen zu beginnen. Bei Zudosierung von etwa 350 ml Beschleunigerkonzentrat auf etwa 20 I Zugabewasser (0,10 bis 0,70 Gew.-% Abbindebeschleuniger) kann bereits nach 4 Stunden der Edelputz auf dem so beschleunigten Armierungsmörtel aufgebracht werden. Unter Einsatz geeigneter Beschleunigungsmittel kann auf einer vormittags mit einem ein entsprechendes Beschleunigungsmittel aufweisenden Klebemörtel an einer Fassade befestigten Wärmedämmplatte bereits nachmittags eine Armierungsschicht aufgebracht werden. Bei Zudosierung von etwa 350 ml Beschleunigerkonzentrat auf 20 I Zugabewasser kann bereits nach 4 Stunden die Armierung auf der mit dem "beschleunigten" Klebemörtel befestigten Wärmedämmplatte aufgebracht werden.

Gemäß einem weiteren Gesichtspunkt der Erfindung kann unter Einsatz erfindungsgemäßer Vorrichtungen und Verfahren auch die Konsistenz von Baumaterialien verändert werden. Eine solche Konsistenzveränderung ist beispielsweise wünschenswert, wenn als Kleber für Wärmedämmplatten und als Armierungsmörtel zum Einbetten des Armierungsgewebes dieselbe Mörteltrockenmischung zum Einsatz kommen soll. Dabei soll mit dem Kleber die Wärmedämmplatte an die entsprechende Fassadenfläche geklebt werden. In diesem Zusammenhang müssen ggf. auch Unebenheiten des Untergrunds ausgeglichen werden. Ferner soll der Kleber eine gute Standfestigkeit aufweisen. Aus diesem Grund ist ein geeigneter Kleber in der Regel zäh und besonders klebrig. Im Gegensatz dazu soll der Armierungsmörtel eine sämige Konsistenz aufweisen und möglichst nicht klebrig sein. Wenn zur Herstellung von Kleber und Armierungsmörtel dieselbe Trockenmischung eingesetzt wird, welche beide Anwendungen abdeckt, müssen bei Einsatz herkömmlicher Verfahren und Vorrichtungen Kompromisse auf der Konsistenzseite eingegangen werden. Dann ist der Kleber oftmals nicht klebrig genug, während der Armierungsmörtel als zu klebrig erscheint. Mit erfindungsgemäßen Verfahren und Vorrichtungen kann dieses Problem durch zeitweise Zugabe geeigneter Zusatzmittel gelöst werden. Dabei wird als Basisrezeptur bevorzugter Zusammensetzungen eine Armierungsmörtelrezeptur gewählt, die nicht so klebrig ist. Zur Herstellung eines genügend zäh und klebrig erscheinenden Klebers kann ein Verdickungsmittelkonzentrat zugegeben werden. Es hat sich als zweckmäßig erwiesen, wenn etwa 300 ml Verdickungsmittelkonzentrat aus der Gruppe Celluloseether, modifizierte Celluloseether, Polyvinylalkohole und Stärkeether bezogen auf 20 I Zugabewasser zugegeben werden.

Neben der Verwendung im Zusammenhang mit der Verarbeitung von mineralisch gebundenen Produkten können erfindungsgemäße Verfahren und Vorrichtungen auch bei der Verarbeitung organisch gebundener Produkte zum Einsatz kommen. Dabei können mit den folgenden Beispielrezepturen durch Zugabe der jeweiligen Additive unterschiedliche Produkteigenschaften erreicht werden:

### Beispiel 3:

| | |
|---|---|
| Wasser | 10-20 Gew.-% |
| Celluloseether | 0,2-0,5 Gew.-% |
| Topfkonservierungsmittel | 0,1-0,3 Gew.-% |
| Dispergiermittel | 0,1-0,5 Gew.-% |
| Pigment/TiO2 | 1-4 Gew.-% |
| Silikat, Füllstoffe | 15-20 Gew.-% |
| Flammschutzmittel | 5-10 Gew.-% |
| Bindemittel/Dispersion | 7-12 Gew.-% |
| Filmkonservierungsmittel | 0,3-1,5 Gew.-% |
| Filmbildehilfsmittel | 0,5-2 Gew.-% |
| Marmorkörnung | 35-45 Gew.-% |
| Additiv zur Veränderung der Produkteigenschaft als zusätzliches Mittel | 0,1-10 Gew.-% |

### Beispiel 4:

| | |
|---|---|
| Wasser | 10-15 Gew.-% |
| Celluloseether | 0,2-0,5 Gew.-% |
| Topfkonservierungsmittel | 0,1-0,3 Gew.-% |
| Dispergiermittel | 0,1-0,5 Gew.-% |
| Füllstoffe | 50-60 Gew.-% |
| Flammschutzmittel | 5-10 Gew.-% |
| Bindemittel/Dispersion | 10-20 Gew.-% |
| Filmbildehilfsmittel | 0,5-2 Gew.-% |
| Verdicker | 0,1-1 Gew.-% |
| Additiv zur Veränderung der Produkteigenschaft als zusätzliches Mittel | 0,1-10 Gew.-% |

Unter Einsatz erfindungsgemäßer Verfahren und Vorrichtungen kann bei diesen Beispielrezepturen eine Trocknungsverzögerung erreicht werden. In den deutschen Offenlegungsschriften DE 198 52 874 und DE 197 11 664 werden Beschichtungsmassen mit einer filmbildenden wäßrigen Kunstharzdispersion beschrieben, die auch bei niedrigen Umgebungstemperaturen und hohen Luftfeuchtigkeiten erhärten. Diese Beschichtungsmassen haben allerdings den Nachteil, daß die Verarbeitung bei einem Anstieg der Umgebungstemperatur im Laufe eines Tages wegen der Beschleunigung des Abbindeprozesses bei steigender Temperatur problematisch wird. Durch Zugabe geeigneter Verzögerungsmittel kann der Abbindeprozeß unter Einsatz erfindungsgemäßer Verfahren und Vorrichtungen in Abhängigkeit von der Umgebungstemperatur auf geeignete Weise verzögert werden. Dabei können die folgenden Verzögerungsmittel in den genannten Beispielrezepturen zum Einsatz kommen:

| | |
|---|---|
| Celluloseetherlösung: | 1-5 Gew.-% |
| Propylenglykol: | 0,5-3 Gew.-% |
| Fettsäurealkohole: | 0,5-2 Gew.-% |

Erfindungsgemäße Verfahren und Vorrichtungen können auch zur Trocknungsbeschleunigung bei Verarbeitung organisch gebundener Produkte eingesetzt werden. Die in den deutschen Offenlegungsschriften DE 198 52 874 und DE 197 11 664 beschriebene beschleunigte Trocknung kann durch Zugabe von geeigneten Trocknungsbeschleunigern erreicht werden. In der EP 1 004 640 wird dazu erläutert, daß eine gute Durchmischung des Trocknungsbeschleunigers mit dem Beschleunigungsstoff erreichbar ist, wenn der Trocknungsbeschleuniger vor Ort mittels eines an und für sich bekannten Rührwerks in den Beschleunigungsstoff eingearbeitet wird. Unter Einsatz erfindungsgemäßer Vorrichtungen und Verfahren kann eine besonders genaue Dosierung der Additive erreicht werden. Als Trocknungsbeschleuniger können den vorstehend angegebenen Beispielrezepturen organisch gebundener Produkte folgende Additive zugegeben werden:

| | |
|---|---|
| Zn-acetat in NH₃-Lösung: | 0,1-1 Gew.-% |
| kationisches Polyethylenimin in wäßriger Lösung: | 0,1-1 Gew.-% |
| Zr-Salz in NH₃-Lösung: | 0,1-1 Gew.-% |

Gemäß einem weiteren Gesichtspunkt der Erfindung kann auch eine Verbesserung der Froststabilität erreicht werden. In der kälteren Jahreszeit besteht die Gefahr, daß Material in kalten Nächten z. B. in einem Schlauch einer maschinellen Verarbeitungseinheit einfriert. Zur Vermeidung dieses Problems ist es möglich, den Materialien der vorstehend angegebenen Beispielrezepturen in der Dosiereinrichtung ein zusätzliches Mittel zur Absenkung des Gefrierpunkts zuzugeben. Geeignet dafür sind u. a. niedrigsiedende Alkohole, die zweckmäßigerweise in einer Menge von 1 bis 3 Gew.-%, bezogen auf das Gesamtgewicht der Zusammensetzung, zugegeben werden.

Gemäß einem weiteren Gesichtspunkt der Erfindung können unter Einsatz erfindungsgemäßer Verfahren und Vorrichtungen auch die Klebeeigenschaften von Klebe- und Armierungsmassen bei vorliegenden schlechten Untergründen verbessert werden. Dazu können dem mindestens einen zur Herstellung des Baumaterials eingesetzten Ausgangsstoff mit Hilfe einer geeigneten Dosiereinrichtung haftungsverbessernde Additive, wie etwa Silane und/oder Silanole, zugegeben werden. Eine Haftungsverbesserung wird dabei ohne Beeinträchtigung der übrigen gewünschten Produkteigenschaften unter Einsatz der vorstehend angegebenen Rezepturen erreicht, wenn das haftungsverbessernde Additiv in einer Menge von 0,1 bis 2 Gew.-%, bezogen auf das Gesamtgewicht der Zusammensetzung, zugegeben wird.

Erfindungsgemäße Verfahren und Vorrichtungen können auch im Zusammenhang mit dem bei der Beschichtung von Fassadenflächen in der Regel gewünschten Schutz vor Mikrobefall eingesetzt werden. Fassadenbeschichtungen, wie z. B. Kunstharzputze, werden mit sog. Filmkonservierungsmitteln ausgerüstet, um einem Befall durch Mikroorganismen (Algen- und Pilzbefall) vorzubeugen. Bei diesen Filmkonservierungsmitteln handelt es sich um Biozide. Solche Mittel sind nicht nur besonders teuer, sondern auch aufgrund ihrer Toxizität problematisch. Es bestehen daher Bestrebungen, den Einsatz dieser Filmkonservierungsmittel auf das unbedingt notwendige Minimum zu reduzieren. Da die Gefahr eines Mikrobefalls regional sehr unterschiedlich ist, gibt es keine optimale Ausrüstung für jede Einsatzbedingung. Wünschenswert wäre eine exakt dosierte Zugabe der Filmkonservierungsmittel mit einer vor Ort zu bestimmenden Konzentration. Mit Hilfe erfindungsgemäßer Verfahren und Vorrichtungen und entsprechenden Bewertungshilfen (Tabellen usw.) kann vor Ort die Zugabe von Filmkonservierern in der für den jeweiligen Einsatzort speziell benötigten Menge erfolgen. Üblicherweise werden die Filmkonservierer den vorstehend angegebenen Rezepturen in einer Menge von 0,5 bis 2 Gew.-%, bezogen auf das Gesamtgewicht der Zusammensetzung, zugegeben.

Gemäß einem weiteren Gesichtspunkt der Erfindung können erfindungsgemäße Verfahren und Vorrichtungen auch zur Zugabe von Porenbildnern eingesetzt werden. In der EP 1 039 058 wird ein Verfahren zur Herstellung von Wärmedämmverbundsystemen mit Hilfe einer organischen Klebe- und Spachtelmasse beschrieben. Bei dem in der genannten Schrift beschriebenen Verfahren wird die Klebe- und Spachtelmasse vor ihrem Einsatz aufgeschäumt. Das Aufschäumen der Klebe- und Spachtelmassen reduziert den Materialeinsatz und verbessert die Verarbeitungseigenschaften. In der genannten Schrift wird beschrieben, daß das Aufschäumen während des Fördervorgangs an der Förderpumpe bzw. an der Spritzpistole durch Zugabe eines geeigneten Schaummittels erfolgen kann. Geeignete Schaummittel sind beispielsweise Polymerisate aus Ethylen- und Propylenoxid, Alkyldiglykoläthersulphat-Natriumsalz, Sodiumlaurylsulphate oder nichtionische Tenside, wie etwa Fettalkoholethoxylate. Die Zugabe dieser Schaummittel bzw. Porenbildner kann je nach gewünschten Verarbeitungseigenschaften unter Einsatz erfindungsgemäßer Verfahren und Vorrichtungen exakt dosiert werden.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. Die einzige Figur der Zeichnung zeigt eine schematische Darstellung einer erfindungsgemäßen Vorrichtung in zwei unterschiedlichen Betriebsstellungen.

Die in der Zeichnung dargestellte Vorrichtung umfaßt im wesentlichen eine Mischeinrichtung in Form eines Mischrohrs 10, eine zum Einleiten eines Trockenmörtelpulvers in das Mischrohr 10 geeignete Beschickungseinrichtung 20, eine zum Einleiten von Wasser in das Mischrohr 10 geeignete Beschickungseinrichtung 30, eine zum Fördern des aus dem Mischrohr 10 abgegebenen Baumaterials zu einem in Form eines Spritzkopfs 50 verwirklichten Applikationsgerät betreibbare Pumpe 40 sowie eine insgesamt mit 32 bezeichnete Leitungsanordnung zum Beschicken des Mischrohrs 10 mit Wasser aus der Beschickungseinrichtung 30. Die Leitungsanordnung 32 umfaßt eine Hauptleitung 33 und eine Bypassleitung 34. Das mit der Beschickungseinrichtung 30 zugeführte Wasser kann über eine Verzweigungsstelle 36 wahlweise über die Hauptleitung 33 oder über die Bypassleitung 34 in das Mischrohr 10 eingeleitet werden. Bei Einleitung des Wassers in das Mischrohr 10 über die Bypassleitung 34 durchläuft das Wasser eine Zugabeeinrichtung 60, mit der es mit einem zusätzlichen Mittel, wie etwa einem Erstarrungsverzögerer und/oder einem Markierungsmittel bzw. Färbemittel, versetzt werden kann.

In der mit A) bezeichneten Betriebsstellung wird das Wasser aus der Beschickungseinrichtung 30 über die Hauptleitung in das Mischrohr 10 eingeleitet. Bei der mit B) bezeichneten Betriebsstellung wird das Wasser aus der Beschickungseinrichtung 30 über die Bypassleitung 34 in das Mischrohr 10 eingeleitet. In beiden Fällen gelangt das Wasser über eine zweite Verzweigungsstelle 38 in das Mischrohr 10. Im Rahmen der Erfindung hat es sich als besonders zweckmäßig erwiesen, wenn bei der Inbetriebnahme des Mischrohrs zunächst das Trockenmörtelpulver und erst danach das Anmachwasser in das Mischrohr eingeleitet wird.

Die Erfindung ist nicht auf das anhand der Zeichnung erläuterte Ausführungsbeispiel beschränkt. Vielmehr ist es auch möglich, das zusätzliche Mittel direkt in die Hauptleitung einzuleiten und/oder die Trockenmörtelmischung mit Hilfe einer gesonderten Zugabeeinrichtung mit einem zusätzlichen Mittel zu versetzen. Ferner kann die Erfindung nicht nur bei der Verarbeitung von Trockenmörtel, sondern auch bei der Verarbeitung von Farb-, Putz- und/oder Estrichmischungen oder anderen erstarrungsfähigen Baumaterialien eingesetzt werden.

## Patentansprüche

1. Verwendung von Markierungsmitteln zur Feststellung, ob Baumaterial
a) mit einem Abbindeverzögerer und/oder einem Erstarrungsverzögerer oder
b) mit einem Erstarrungsbeschleuniger und/oder Abbindebeschleuniger in einer Vorrichtung zum Verarbeiten von Baumaterial versetzt ist.

2. Verwendung nach Anspruch 1, worin das Markierungsmittel ein Färbemittel ist.

3. Verwendung nach den Ansprüchen 1-2, worin das Markierungsmittel über eine Beschickungsöffnung zu der Vorrichtung zugegeben wird.

4. Verwendung nach den Ansprüchen 1-3, worin das Markierungsmittel nur zeitweise zugesetzt wird, nämlich in Zusammenhang mit der Beendigung eines Verarbeitungsabschnitts.

5. Verwendung nach irgendeinem der vorangegangenen Ansprüchen, wobei das Markierungsmittel durch eine Zugabeeinrichtung, vorzugsweise eine automatisch arbeitende Zugabeeinrichtung, in die Vorrichtung dosiert wird.

6. Verwendung nach irgendeinem der vorangegangenen Ansprüchen, wobei das Markierungsmittel durch eine Zugabeeinrichtung, vorzugsweise eine automatisch arbeitende Zugabeeinrichtung, in die Vorrichtung dosiert wird, die eine automatisch einstellbare Zugabe des Markierungsmittels nach Art und/oder Menge in Abhängigkeit von erwarteten Stillstandszeiten, Witterungsbedingungen und/oder Produkteigenschaften ermöglicht.

7. Verwendung nach irgendeinem der vorangegangenen Ansprüche, wobei das Markierungsmittel zusammen
a) mit einem Abbindeverzögerer und/oder Erstarrungsverzögerer oder
b) mit einem Erstarrungsbeschleuniger und/oder Abbindebeschleuniger in die Vorrichtung eingebracht wird.
